(19) **Europäisches Patentamt / European Patent Office / Office européen des brevets**

(11) **EP 3 109 012 B1**

(12) **EUROPÄISCHE PATENTSCHRIFT**

(45) Veröffentlichungstag und Bekanntmachung des Hinweises auf die Patenterteilung:
**06.07.2022  Patentblatt 2022/27**

(21) Anmeldenummer: **16001269.6**

(22) Anmeldetag: **06.06.2016**

(51) Internationale Patentklassifikation (IPC):
**B25J 9/16** (2006.01)

(52) Gemeinsame Patentklassifikation (CPC):
**B25J 9/1674;** G05B 2219/39319;
G05B 2219/39346; G05B 2219/39433

(54) **UMSCHALTEN EINER STEUERUNG EINES ROBOTERS IN EINEN HANDFÜHR-BETRIEBSMODUS**

SWITCHING OF A CONTROLLER OF A ROBOT IN A MANUAL OPERATING MODE

COMMUTATION D'UNE COMMANDE D'UN ROBOT EN MODE DE FONCTIONNEMENT MANUEL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.06.2015  DE 102015008144**

(43) Veröffentlichungstag der Anmeldung:
**28.12.2016  Patentblatt 2016/52**

(73) Patentinhaber: **KUKA Deutschland GmbH 86165 Augsburg (DE)**

(72) Erfinder:
• **Ueberle, Marc-Walter 86316 Friedberg (DE)**
• **Rohmer, Matthias 86157 Augsburg (DE)**
• **Reichl, Tobias 80939 München (DE)**
• **Schreiber, Günter 86316 Friedberg (DE)**
• **Mueller-Sommer, Martin 86447 Aindling (DE)**
• **Bonin, Uwe 86161 Augsburg (DE)**

(74) Vertreter: **Schlotter, Alexander Carolus Paul et al Wallinger Ricker Schlotter Tostmann Patent- und Rechtsanwälte Partnerschaft mbB Zweibrückenstrasse 5-7 80331 München (DE)**

(56) Entgegenhaltungen:
EP-A1- 2 189 255                EP-A2- 2 492 062
DE-A1-102008 027 008        US-A- 5 363 474
US-A1- 2013 345 875          US-A1- 2014 107 843
US-A1- 2014 379 126

**Beschreibung**

Die vorliegende Erfindung betrifft ein Verfahren zum Umschalten einer Steuerung eines Roboters in einen Handführ-Betriebsmodus, eine Steuerung und ein Computerprogrammprodukt zur Durchführung des Verfahrens sowie eine Roboteranordnung mit der Steuerung.

Aus der DE 10 2013 218 823 A1 ist ein Handführ-Betriebsmodus zum Bewegen eines Roboters durch manuelles Aufprägen von Kräften und/oder Drehmomenten auf den Roboter bekannt.

In einem solchen Handführ-Betriebsmodus können extern auf den Roboter wirkende Kräfte und/oder Drehmomente und damit insbesondere manuell auf den Roboter aufgeprägte Kräfte und/oder Drehmomente vorteilhaft auf Basis von erfassten Gelenkkräften und/oder -drehmomenten und einem Modell des Roboters ermittelt werden.

Der Handführ-Betriebsmodus ist daher entsprechend sensitiv gegenüber Fehlern des Modells, insbesondere einer robotergeführten Last, und der Erfassung der Gelenkkräfte bzw. -drehmomente. Insbesondere dadurch kann es bei einem Umschalten in den Handführ-Betriebsmodus zu unerwarteten und/oder unerwünschten Reaktionen des Roboters kommen.

So könnte beispielsweise die Gewichtskraft einer nicht oder als zu leicht modellierten robotergeführten Last zu einem unerwarteten und -wünschten Absacken des Roboters infolge des Umschaltens in den Handführ-Betriebsmodus führen, da diese Gewichtskraft irrtümlich als manuell auf den Roboter aufgeprägte Vertikalkraft zum Bewegen des Roboters erkannt wird. In einem dem Handführ-Betriebsmodus vorhergehenden Betriebsmodus, in dem der Roboter beispielsweise (nur) positionsgeregelt ist oder eine höhere Impedanz aufweist, führt dieselbe nicht oder als zu leicht modellierte robotergeführte Last demgegenüber allenfalls zu einer verringerten Positioniergenauigkeit.

Aus der EP 2 492 062 A2 ist ein Industrieroboter mit einem Roboterarm und einer Steuervorrichtung bekannt, die dazu eingerichtet ist, Antriebe in einem Teilbetriebsmodus mittels einer Regelvorrichtung kraftgeregelt anzusteuern, wobei die Regelvorrichtung aufgrund einer vom Roboterarm aufzubringenden Soll-Kraft von den Antrieben aufzubringende Soll-Drehmomente ermittelt und einen Integral-Anteil aufweist und dazu eingerichtet ist, dieses aufgrund wenigstens eines Kriteriums insbesondere dynamisch zu begrenzen.

Die US 2014/0379126 A1 beschreibt ein Verfahren zum Überwachen eines kinamtisch redundanten Roboters, bei dem Gelenkkräfte erfasst, eine externe Wirkkraft zwischen einem roboterfesten Referenz und einer Umgebung sowie eine weitere Überwachungsgröße, die wenigstens im Wesentlichen unabhängig von einer, auf die Referenz wirkenden externen Kraft ist, ermittelt und die ermittelte Wirkkraft und die ermittelte weitere Überwachungsgröße überwacht werden.

Ein aus der DE 10 2008 027 008 A1 bekanntes Verfahren zum Steuern eines Manipulators umfasst die Schritte: Ermitteln einer Soll-Bewegungsrichtung auf Basis einer auf den Manipulator ausgeübten Kraft und Bewegen des Manipulators in der ermittelten Soll-Bewegungsrichtung um eine vorbestimmte Strecke.

Die US 5 363 474 A betrifft ein System zur Steuerung eines Industrieroboters, das Mittel zum Überwachen der Größe einer externen Kraft aufweist, die während des direkten Lernens auf das vordere Ende einer Hand ausgeübt wird, so dass die Bewegung des Roboters zwangsweise eingeschränkt werden kann, wenn die externe Kraft einen vorbestimmten Wert darüber hinaus erreicht.

Aufgabe der vorliegenden Erfindung ist es, eine Steuerung eines Roboters zu verbessern.

Diese Aufgabe wird durch ein Verfahren mit den Merkmalen des Anspruchs 1 gelöst.

Ansprüche 7-9 stellen eine Steuerung und ein Computerprogrammprodukt zur Durchführung eines hier beschriebenen Verfahrens sowie eine Roboteranordnung mit einer hier beschriebenen Steuerung unter Schutz. Die Unteransprüche betreffen vorteilhafte Weiterbildungen.

Nach einem Aspekt der vorliegenden Erfindung wird bei einem Verfahren zum Umschalten einer Steuerung eines Roboters in einen Handführ-Betriebsmodus, der zum Bewegen des Roboters durch manuelles Aufprägen von Kräften und/oder Drehmomenten auf den Roboter vorgesehen bzw. eingerichtet ist, infolge des Umschaltens und in Abhängigkeit von Soll-Gelenkkräften und/oder-drehmomenten und in einer Weiterbildung in Abhängigkeit von erfassten Gelenkkräften und/oder -drehmomenten eine Fehlerreaktion ausgelöst.

Hierdurch kann in einer Ausführung vorteilhaft insbesondere eine unerwartete und/oder -wünschte Reaktionen des Roboters infolge des Umschaltens reduziert und/oder ein den Roboter handführender oder dies beabsichtigender Bediener gewarnt werden.

Der Roboter weist in einer Ausführung wenigstens drei, insbesondere wenigstens sechs, insbesondere wenigstens sieben, insbesondere durch, insbesondere elektromotorische und/oder Getriebe aufweisende, Antriebe aktuierbare bzw. aktuierte, Gelenke, insbesondere Drehgelenke, auf.

Die Steuerung ist in einer Ausführung, insbesondere drahtlos oder-gebunden, mit dem Roboter, insbesondere dessen Antrieben, signalverbunden und in einer Weiterbildung, insbesondere hard- und/oder software- bzw. programmtechnisch, dazu eingerichtet, die Antriebe zu steuern, insbesondere Soll-Größen, insbesondere Soll-Gelenkkräfte und/oder -drehmomente, insbesondere Soll-Ströme oder -spannungen, vorzugeben bzw. zu kommandieren.

Als Gelenkkräfte bzw. -drehmomente werden vorliegend insbesondere Kräfte bzw. Drehmomente bezeichnet, die an, insbesondere in, Gelenken des Roboters, insbesondere zwischen einem Antrieb und einem von diesem bewegten bzw. mit diesem gekoppelten Roboterglied wirken.

Sie können in einer Ausführung direkt, insbesondere durch Kraft- bzw. Drehmomentsensoren an den Antrieben, oder indirekt, insbesondere auf Basis von erfassten Energiegrößen, insbesondere Strömen oder Spannungen, der Antriebe erfasst, insbesondere direkt oder indirekt gemessen, werden.

In dem Handführ-Betriebsmodus folgt der Roboter in einer Ausführung einer manuell auf ihn aufgeprägten externen Kraft bzw. einem manuell auf ihn aufgeprägten externen Drehmoment, insbesondere durch Ausweichen in Abhängigkeit von der Kraft bzw. dem Drehmoment, insbesondere in Richtung der Kraft bzw. des Drehmoments oder auch einer vorgegebenen, insbesondere kartesischen, Richtung, und/oder entsprechend einem Betrag der Kraft bzw. des Drehmoments. Er kann in einer Ausführung hierzu bzw. in dem Handführ-Betriebsmodus kraftgeregelt gesteuert sein bzw. werden, insbesondere impedanz- oder admittanzgeregelt.

Kräfte und/oder Drehmomente können insbesondere direkt durch Kraft- bzw. Drehmomenteinwirkung am Roboter selber bzw. über einen oder mehrere Kraft- bzw. Drehmomentangriffspunkte am Roboter selber oder indirekt über ein oder mehrere mit diesem gekoppelte, insbesondere verbundene, Elemente, insbesondere einen Endeffektor, ein robotergeführtes Werkzeug, einen mit dem Roboter kraft- bzw. drehmomentleitend verbundenen Griff oder Hebel oder dergleichen, bzw. über einen oder mehrere Kraft- bzw. Drehmomentangriffspunkte an diesem bzw. diesen Element(en) aufgeprägt werden bzw. sein.

In einer Ausführung wird die Fehlerreaktion in Abhängigkeit davon ausgelöst, ob eine Gelenkkraft oder ein Gelenkdrehmoment des Roboters, die bzw. das durch eine extern auf den Roboter wirkende Kraft oder ein extern auf den Roboter wirkendes Drehmoment aufgeprägt wird bzw. ist, einen Gelenk-Schwellwert, insbesondere betragsmäßig, übersteigt, insbesondere, sofern bzw. falls eine Gelenkkraft oder ein Gelenkdrehmoment, die bzw. das durch eine extern auf den Roboter wirkende Kraft oder ein extern auf den Roboter wirkendes Drehmoment aufgeprägt wird bzw. ist, insbesondere betragsmäßig, einen vorgegebenen Gelenk-Schwellwert übersteigt.

Ein Gelenk-Schwellwert definiert in einer Ausführung einen Schwellwert für ein(e) an einem Gelenk anliegende(s) Kraft bzw. Drehmoment, er kann somit insbesondere eine Kraft oder ein Drehmoment angeben, insbesondere sein.

In einer Ausführung sind für wenigstens zwei Gelenke des Roboters dieselben oder unterschiedliche Gelenk-Schwellwerte vorgegeben. In einer Ausführung beträgt wenigstens ein vorgegebener Gelenk-Schwellwert wenigstens 1 Nm, insbesondere wenigstens 5 Nm, und/oder höchstens 100 Nm, insbesondere höchstens 75 Nm.

Die durch eine extern auf den Roboter wirkende Kraft oder ein extern auf den Roboter wirkendes Drehmoment aufgeprägten Gelenkkräfte und/der -drehmomente $\tau_e$ können in einer Ausführung auf Basis erfasster Gelenkkräfte und/oder -drehmomente $\tau_{mess}$ und modellbasierter bzw. auf Basis eines Modells des Roboters abgeschätzter Gelenkkräften und/oder -drehmomente $\tau_{Modell}$ ermittelt werden bzw. sein, insbesondere auf Basis einer Differenz zwischen diesen: $\tau_e = \tau_{mess} - \tau_{Modell}$, insbesondere diese Differenz sein. Auf den Roboter wirkende Kräfte und Drehmomente, die in dem Modell berücksichtigt sind, beispielsweise eine Gewichtskraft einer robotergeführt modellierten Last, werden insofern dem Roboter(modell) zugerechnet, so dass eine extern auf den Roboter wirkende Kraft bzw. ein extern auf den Roboter wirkendes Drehmoment im Sinne der vorliegenden Erfindung insbesondere eine im Modell nicht (korrekt) berücksichtigte Kraft bzw. ein im Modell nicht (korrekt) berücksichtigtes Drehmoment ist. Mit anderen Worten kann eine extern auf den Roboter wirkende Kraft bzw. ein extern auf den Roboter wirkendes Drehmoment eine Störkraft bzw. ein Stördrehmoment sein, insbesondere eine Gewichtskraft bzw. ein hierdurch aufgeprägtes Drehmoment einer robotergeführten unbekannten oder fehlerhaft identifizierten Last, eine manuell auf den Roboter aufgeprägte Kraft bzw. ein manuell auf den Roboter aufgeprägtes Drehmoment oder dergleichen.

Übersteigt der Betrag einer solchen Gelenkkraft oder eines solchen Gelenkdrehmoments einen Gelenk-Schwellwert, so deutet dies auf einen entsprechenden Modellfehler hin, der zu einer unerwarteten und/oder -wünschten Reaktionen des Roboters führen könnte. Daher kann dies vorteilhaft zur Detektion eines Modellfehlers und damit zur Auslösung der Fehlerreaktion genutzt werden.

Allerdings können auch ohne Modellfehler durch extern auf den Roboter wirkende Kräfte oder Drehmomente Gelenkkräfte und/der -drehmomente $\tau_e$ aufgeprägt werden bzw. sein, beispielsweise, indem der den Roboter handführende oder dies beabsichtigende Bediener beim Umschalten bereits an dem Roboter zieht oder der Roboter beim Umschalten mit der Umgebung verspannt, insbesondere -klemmt, ist.

In einer Ausführung wird die Fehlerreaktion alternativ oder zusätzlich, insbesondere in einer logischen ODER-Verknüpfung mit dem Gelenk-Schwellwert, in Abhängigkeit davon ausgelöst, ob eine Änderung $d\tau_{d,i}/dt$ einer Soll-Gelenkkraft oder eines Soll-Gelenkdrehmoments $\tau_{d,i}$ infolge des Umschaltens, insbesondere betragsmäßig, einen Änderungsschwellwert übersteigt, insbesondere, sofern bzw. falls die zeitliche Änderung einer bzw. eines von der Steuerung auf Basis extern auf den Roboter wirkender Kräfte und/oder Drehmomente, die insbesondere auf Basis erfasster Gelenkkräfte und/oder -drehmomente ermittelt werden bzw. sein können, ermittelten bzw. vorgegebenen Soll-Gelenkkraft bzw. -drehmoments des Roboters, insbesondere betragsmäßig, einen vorgegebenen Änderungs-Schwellwert übersteigt.

Damit können in einer Ausführung vorteilhaft insbesondere den vorstehend erläuterten Situationen und/oder einem Umschalten innerhalb einer virtuellen Wand Rechnung getragen und/oder unerwartete Bewegungen beim Umschalten, insbesondere unabhängig von deren Ursache, reduziert, vorzugsweise vermieden, werden.

Ein Änderungs-Schwellwert definiert in einer Ausführung einen Schwellwert für eine, insbesondere zeitliche, Änderung, insbesondere Ableitung, einer Soll-Gelenkkraft oder eines Soll-Gelenkdrehmoments, er kann somit insbesondere eine, insbesondere zeitliche, Änderung, insbesondere Ableitung, einer Kraft oder eines Drehmoment angeben, insbesondere sein.

In einer Ausführung sind für wenigstens zwei Gelenke des Roboters dieselben oder unterschiedliche Änderungs-Schwellwerte vorgegeben. In einer Ausführung beträgt wenigstens ein vorgegebener Änderungs-Schwellwert wenigstens 1 Nm/s und/oder höchstens 10 Nm/s. Wie auch die vorstehend genannten Ober- und Untergrenzen für den Gelenk-Schwellwert ist auch diese Ober- und Untergrenze natürlich maschinenabhängig und kann daher in einer Ausführung maschinenabhängig bzw. spezifisch vorgegeben sein bzw. werden.

Übersteigt der Betrag einer Änderung einer Soll-Gelenkkraft oder eines Soll-Gelenkdrehmoments einen Änderungs-Schwellwert, so deutet dies auf einen entsprechenden Modellfehler hin, der zu einer unerwarteten und/oder -wünschten Reaktionen des Roboters führen könnte, da es unwahrscheinlich ist, dass der Benutzer exakt mit dem Umschalten von ihm aufgeprägte externe Kräfte und/oder Drehmomente signifikant erhöht. Daher kann auch die zeitliche Änderung von Soll-Gelenkkräften und/oder -drehmomenten infolge des Umschaltens vorteilhaft zur Detektion eines Modellfehlers und damit zur Auslösung der Fehlerreaktion genutzt werden.

Alternativ oder zusätzlich, insbesondere in einer logischen ODER-Verknüpfung mit dem Gelenk-Schwellwert und/oder dem Änderungs-Schwellwert, wird in einer Ausführung die Fehlerreaktion in Abhängigkeit davon ausgelöst, ob eine auf Basis von erfassten Gelenkkräften und/oder -drehmomenten des Roboters ermittelte, extern auf den Roboter wirkende Vertikalkraft, insbesondere betragsmäßig, einen Vertikalkraft-Schwellwert übersteigt, insbesondere, sofern bzw. falls die auf Basis von erfassten Gelenkkräften und/oder -drehmomenten des Roboters ermittelte, extern auf den Roboter wirkende Vertikalkraft, insbesondere betragsmäßig, einen Vertikalkraft-Schwellwert übersteigt.

Eine Vertikalkraft ist in einer Ausführung eine Kraft parallel zur Gravitations- bzw. Schwerkraftrichtung.

Eine extern auf den Roboter wirkende Vertikalkraft $f_z$ kann in einer Ausführung auf Basis von erfassten Gelenkkräften und/oder -drehmomenten des Roboters ermittelt werden bzw. sein, insbesondere auf Basis einer Projektion einer Differenz $\tau_e = \tau_{mess} - \tau_{Modell}$ zwischen erfassten Gelenkkräften und/oder -drehmomenten $\tau_{mess}$ und modellbasierten bzw. auf Basis eines Modells des Roboters abgeschätzten Gelenkkräften und/oder -drehmomenten $\tau_{modell}$ in den kartesischen Raum, insbesondere gemäß $f_z = \left( j_z^T \right)^{\#} \tau_e$ mit der Pseudoinversen $^{\#}$ der Transponierten $^T$ der Zeile

$$j_z = \left[ \frac{\partial Z}{\partial q_1} \cdots \frac{\partial Z}{\partial q_n} \right]$$ der Jacobimatrix einer roboterfesten Referenz, insbesondere des TCPs des Roboters, mit der vertikalen Komponente Z der kartesischen Lage der roboterfesten Referenz und den Gelenkkoordinaten $q_1,...,q_n$ des

$$\left( j_z^T \right)^{\#} = \begin{cases} 0 \Leftrightarrow j_z = 0 \\ \dfrac{j_z}{j_z j_z^T} \end{cases}.$$

n-gelenkigen Roboters, wobei in einer Ausführung

Führt der Roboter eine Last, so übt deren Gewichtskraft wenigstens eine Vertikalkraft auf den Roboter aus. Sofern der Roboter und/oder diese Last nicht oder nicht korrekt modelliert sind, ergibt sich auf Basis der erfassten Gelenkkräften und/oder -drehmomente des Roboters eine entsprechende extern auf den Roboter wirkende Vertikalkraft. Übersteigt deren Betrag nun den Vertikalkraft-Schwellwert, kann dies vorteilhaft zur Detektion eines Modellfehlers und damit zur Auslösung der Fehlerreaktion genutzt werden.

Ein Vertikalkraft-Schwellwert definiert in einer Ausführung einen Schwellwert für eine extern auf den Roboter wirkende, insbesondere direkt an ihm oder über ein mit ihm gekoppeltes Element angreifende, Vertikalkraft, er kann somit insbesondere eine Kraft angeben, insbesondere sein.

In analoger Weise ergibt sich auf Basis der erfassten Gelenkkräfte und/oder -drehmomente des Roboters insbesondere bei fehlerhaft modellierter Schwerpunktlage einer robotergeführten Last ein extern auf den Roboter wirkendes Horizontaldrehmoment.

Entsprechend wird in einer Ausführung alternativ oder zusätzlich, insbesondere in einer logischen ODER-Verknüpfung mit dem Gelenk-Schwellwert, dem Änderungs-Schwellwert und/oder dem Vertikalkraft-Schwellwert, die Fehlerreaktion in Abhängigkeit davon ausgelöst, ob ein auf Basis von erfassten Gelenkkräften und/oder -drehmomenten des Roboters ermitteltes, extern auf den Roboter wirkendes Horizontaldrehmoment, insbesondere betragsmäßig, einen Horizontaldrehmoment-Schwellwert übersteigt, insbesondere, sofern bzw. falls wenigstens eine Komponente des auf Basis von erfassten Gelenkkräften und/oder -drehmomenten des Roboters ermittelten, extern auf den Roboter wirkenden Horizontaldrehmoments, insbesondere betragsmäßig, einen Horizontaldrehmoment-Schwellwert übersteigt.

Ein Horizontaldrehmoment ist in einer Ausführung ein Drehmoment um eine oder zwei, insbesondere zueinander senkrechte, Achse(n) senkrecht zur Gravitationsrichtung.

Ein Horizontaldrehmoment-Schwellwert definiert in einer Ausführung einen Schwellwert für ein extern auf den Roboter wirkendes, insbesondere direkt an ihm oder über ein mit ihm gekoppeltes Element angreifendes, Horizontaldrehmoment, er kann somit insbesondere ein Drehmoment angeben, insbesondere sein.

Ein extern auf den Roboter wirkendes Horizontaldrehmoment T kann in einer Ausführung auf Basis von erfassten Gelenkkräften und/oder -drehmomenten des Roboters ermittelt werden bzw. sein, insbesondere auf Basis einer Projektion einer Differenz $\tau_e = \tau_{mess} - \tau_{Modell}$ zwischen erfassten Gelenkkräften und/oder -drehmomenten $\tau_{mess}$ und modellbasierten bzw. auf Basis eines Modells des Roboters abgeschätzten Gelenkkräften und/oder -drehmomenten $\tau_{Modell}$ in den kartesischen Raum, insbesondere gemäß $T = \left(j_\omega^T\right)^\# \tau_e$ mit der Pseudoinversen $^\#$ der Transponierten $^T$ der Zeile

$$j_\omega = \left[\frac{\partial \omega}{\partial q_1} \cdots \frac{\partial \omega}{\partial q_n}\right]$$

der Jacobimatrix einer roboterfesten Referenz, insbesondere des TCPs, des Roboters mit einer horizontalen Rotationskomponente bzw. -achse $\omega$ und den Gelenkkoordinaten $q_1, \ldots, q_n$ des n-gelenkigen Roboters,

$$\left(j_\omega^T\right)^\# = \begin{cases} 0 \Leftrightarrow j_\omega = 0 \\ \dfrac{j_\omega}{j_\omega j_\omega^T} \end{cases}.$$

wobei in einer Ausführung

Führt der Roboter eine Last, so übt deren Gewichtskraft ein Kippmoment um wenigstens eine horizontale Achse auf den Roboter aus. Sofern diese Last nicht oder nicht korrekt modelliert ist, ergibt sich auf Basis der erfassten Gelenkkräfte und/oder -drehmomente des Roboters ein entsprechendes extern auf den Roboter wirkendes Horizontaldrehmoment. Übersteigt dessen Betrag nun den Horizontaldrehmoment-Schwellwert, kann dies vorteilhaft zur Detektion eines Modellfehlers und damit zur Auslösung der Fehlerreaktion genutzt werden.

Die Ermittlung einer bzw. eines solchen (fehlerhaften) Vertikalkraft bzw. Horizontaldrehmoments auf Basis von erfassten Gelenkkräften und/oder -drehmomenten des Roboters hängt von der Pose des Roboters ab. So prägt beispielsweise eine robotergeführte Last in einer sogenannten Kerzenstellung, in der ein Knickarmroboter vertikal nach oben ausgestreckt ist, keine oder nur geringe Gelenkkräfte bzw. -drehmomente auf. Entsprechend kann sich dann ein Unterschreiten eines Vertikalkraft- bzw. Horizontaldrehmoment-Schwellwerts auch bei einer fehlerhaft modellierten Last ergeben und somit eine Detektion eines Modellfehlers verhindern.

Insbesondere daher wird in einer Ausführung die Fehlerreaktion alternativ oder zusätzlich, insbesondere in einer logischen ODER-Verknüpfung mit dem Gelenk-Schwellwert, dem Änderungs-Schwellwert, dem Vertikalkraft-Schwellwert und/oder dem Horizontaldrehmoment-Schwellwert, in Abhängigkeit davon ausgelöst, ob ein Verhältnis einer extern auf den Roboter wirkenden Vertikalkraft zu hierdurch aufgeprägten Gelenkkräften und/oder -drehmomenten des Roboters oder ein Verhältnis eines extern auf den Roboter wirkenden Horizontaldrehmoments zu hierdurch aufgeprägten Gelenkkräften und/oder-drehmomenten des Roboters, insbesondere betragsmäßig und/oder roboterposenbedingt, einen Posen-Schwellwert übersteigt, insbesondere, sofern bzw. falls ein Verhältnis einer extern auf den Roboter wirkenden Vertikalkraft zu hierdurch aufgeprägten Gelenkkräften und/oder -drehmomenten des Roboters oder ein Verhältnis eines extern auf den Roboter wirkenden Horizontaldrehmoments zu hierdurch aufgeprägten Gelenkkräften und/oder -drehmomenten des Roboters einen Posen-Schwellwert, insbesondere betragsmäßig und/oder roboterposenbedingt, übersteigt.

Ein Posen-Schwellwert definiert in einer Ausführung einen Schwellwert für ein Verhältnis einer extern auf den Roboter wirkenden Vertikalkraft zu hierdurch aufgeprägten Gelenkkräften und/oder-drehmomenten des Roboters oder für ein Verhältnis eines extern auf den Roboter wirkenden Horizontaldrehmoments zu hierdurch aufgeprägten Gelenkkräften und/oder-drehmomenten des Roboters, er kann somit insbesondere ein Verhältnis von Kräften und/oder Drehmomenten angeben, insbesondere sein.

Das Verhältnis $\zeta$ einer extern auf den Roboter wirkenden Vertikalkraft bzw. eines extern auf den Roboter wirkenden Horizontaldrehmoments zu hierdurch aufgeprägten Gelenkkräften und/oder -drehmomenten des Roboters kann in einer Ausführung auf Basis des Betrags der vorstehend bereits erläuterten Pseudoinversen $\left(j_z^T\right)^\#$, $\left(j_\omega^T\right)^\#$ ermittelt werden, insbesondere gemäß $\zeta = \left|\left(j_z^T\right)^\#\right|$ bzw. $\zeta = \left|\left(j_\omega^T\right)^\#\right|$. Gleichermaßen kann es invers auch auf Basis des Betrags der Zeile $j_z$ bzw. $j_\omega$ der Jacobimatrix des TCPs des Roboters ermittelt werden, insbesondere gemäß $\zeta =$

$|j_z|^{-1}$ bzw. $\zeta = |j_\omega|^{-1}$. Die Verhältnisse einer Vertikalkraft und zweier Horizontaldrehmomente können in analoger Weise auch gemeinsam mittels der entsprechenden Submatrix $J_{z,\omega_x,\omega_y}$ der Jacobimatrix bzw. ihrer Pseudoinversen oder mittels der Pseudoinversen der gesamten Jacobimatrix ermittelt werden.

Neben Modellfehlern können auch bei an sich korrekten Modellen externe, nicht rein vertikale Kräfte und nicht rein horizontale Drehmomente, wie sie beispielsweise durch den Bediener oder eine Klemmsituation des Roboters auf den Roboter wirken können, (auch) zu einer auf Basis von erfassten Gelenkkräften und/oder -drehmomenten des Roboters ermittelten, extern auf den Roboter wirkenden Vertikalkraft und/oder einem auf Basis von erfassten Gelenkkräften und/oder -drehmomenten des Roboters ermittelten, extern auf den Roboter wirkenden Horizontaldrehmoment führen.

Daher wird in einer Weiterbildung die Fehlerreaktion in Abhängigkeit davon ausgelöst, ob sowohl die auf Basis von ermittelten Gelenkkräften und/oder -drehmomenten des Roboters ermittelte, extern auf den Roboter wirkende Vertikalkraft den Vertikalkraft-Schwellwert übersteigt oder ein auf Basis von ermittelten Gelenkkräften und/oder -drehmomenten des Roboters ermitteltes, extern auf den Roboter wirkendes Horizontaldrehmoment einen Horizontaldrehmoment-Schwellwert übersteigt, als auch zusätzlich bzw. in einer logischen UND-Verknüpfung eine auf Basis der ermittelten Gelenkkräfte und/oder -drehmomente des Roboters ermittelte, hierzu komplementäre externe Belastung einen Belastungsschwellwert, insbesondere betragsmäßig, unterschreitet.

Die komplementäre externe Belastung $K$ kann in einer Ausführung auf Basis von erfassten Gelenkkräften und/oder -drehmomenten des Roboters ermittelt werden bzw. sein, insbesondere auf Basis einer Nullraumprojektion einer Differenz $\tau_e = \tau_{mess} - \tau_{Modell}$ zwischen erfassten Gelenkkräften und/oder -drehmomenten $\tau_{mess}$ und modellbasierten bzw. auf Basis eines Modells des Roboters abgeschätzten Gelenkkräften und/oder -drehmomenten $\tau_{Modell}$, insbesondere

gemäß $K = \tau_e - j_z^T \left( j_z^T \right)^{\#} \tau_e$ bzw. einer entsprechend erweiterten Nullraumprojektion auch für zwei zueinander senkrechte Horizontaldrehmomente $K = \tau_e - J_{z,\omega_x,\omega_y}^T \left( J_{z,\omega_x,\omega_y}^T \right)^{\#} \tau_e$ mit der entsprechenden Submatrix $J_{z,\omega_x,\omega_y}$ der Jacobimatrix bzw. ihrer Pseudoinversen.

Die Fehlerreaktion umfasst in einer Ausführung eine Beschränkung bzw. Limitierung einer Bewegungsgeschwindigkeit des Roboters, insbesondere im kartesischen Raum und/oder im Gelenkkoordinaten- bzw. Achsraum des Roboters. Zusätzlich oder alternativ umfasst die Fehlerreaktion in einer Ausführung eine Beschränkung bzw. Limitierung eines Arbeitsraums bzw. einer zulässigen Bewegung des Roboters, insbesondere im kartesischen Raum und/oder im Gelenkkoordinaten- bzw. Achsraum des Roboters. Zusätzlich oder alternativ umfasst die Fehlerreaktion in einer Ausführung eine Erhöhung einer virtuellen bzw. regelungstechnischen Dämpfung des Roboters. Hierdurch kann vorteilhaft jeweils eine unerwarte und/oder -wünschte Reaktion des Roboters jedenfalls begrenzt werden.

Zusätzlich oder alternativ umfasst die Fehlerreaktion in einer Ausführung die, insbesondere optische, akustische und/oder haptische, Ausgabe eines Fehlersignals.

Einer oder mehrere der Schwellwerte können (jeweils) fest bzw. werkseitig vorgegeben sein. Gleichermaßen können einer oder mehrere der Schwellwerte (jeweils), insbesondere durch einen Benutzer bzw. eine Eingabe, parametrierbar bzw. veränderlich bzw. variabel (vorgebbar) sein, insbesondere vorgegeben bzw. parametriert werden.

Eine Steuerung zum Steuern eines bzw. des Roboters einer Roboteranordnung ist nach einem Aspekt der vorliegenden Erfindung, insbesondere hard- und/oder Software- bzw. programmtechnisch, zur Durchführung eines hier beschriebenen Verfahrens eingerichtet und/oder weist auf:

Mittel zum Umschalten der Steuerung in einen Handführ-Betriebsmodus zum Bewegen des Roboters durch manuelles Aufprägen von Kräften und/oder Drehmomenten auf den Roboter; und

Mittel zum Auslösen einer Fehlerreaktion infolge des Umschaltens und in Abhängigkeit von erfassten und/oder Soll-Gelenkkräften und/oder -drehmomenten und/oder einer Pose des Roboters.

Das Mittel zum Auslösen einer Fehlerreaktion weist in einer Ausführung auf:

Mittel zum Erfassen von Gelenkkräften und/oder -drehmomenten und/oder einer Pose des Roboters und/oder zum Vorgeben von Soll-Gelenkkräften
und/oder -drehmomenten des Roboters; und/oder

Mittel zum Auslösen der Fehlerreaktion in Abhängigkeit davon, ob eine auf Basis von erfassten Gelenkkräften und/oder -drehmomenten des Roboters ermittelte, extern auf den Roboter wirkende Vertikalkraft einen Vertikalkraft-Schwellwert übersteigt; und/oder

Mittel zum Auslösen der Fehlerreaktion in Abhängigkeit davon, ob ein auf Basis von erfassten Gelenkkräften und/oder -drehmomenten des Roboters ermitteltes, extern auf den Roboter wirkendes Horizontaldrehmoment einen Horizontaldrehmoment-Schwellwert übersteigt; und/oder

Mittel zum Auslösen der Fehlerreaktion in Abhängigkeit davon, ob eine Änderung einer Soll-Gelenkkraft oder eines Soll-Gelenkdrehmoments infolge des Umschaltens einen Änderungs-Schwellwert übersteigt; und/oder

Mittel zum Auslösen der Fehlerreaktion in Abhängigkeit davon, ob ein Verhältnis einer extern auf den Roboter wirkenden Vertikalkraft zu hierdurch aufgeprägten Gelenkkräften und/oder -drehmomenten des Roboters oder ein Verhältnis eines extern auf den Roboter wirkenden Horizontaldrehmoments zu hierdurch aufgeprägten Gelenkkräften und/oder -drehmomenten des Roboters einen Posen-Schwellwert übersteigt; und/oder

Mittel zum Auslösen der Fehlerreaktion in Abhängigkeit davon, ob eine durch eine extern auf den Roboter wirkende Kraft oder ein extern auf den Roboter wirkendes Drehmoment aufgeprägte Gelenkkraft des Roboters oder eine durch eine extern auf den Roboter wirkende Kraft oder ein extern auf den Roboter wirkendes Drehmoment aufgeprägtes Gelenkdrehmoment des Roboters einen Gelenk-Schwellwert übersteigt; und/oder

Mittel zum Auslösen der Fehlerreaktion in Abhängigkeit davon, ob sowohl die auf Basis von ermittelten Gelenkkräften und/oder -drehmomenten des Roboters ermittelte, extern auf den Roboter wirkende Vertikalkraft den Vertikalkraft-Schwellwert übersteigt oder ein auf Basis von ermittelten Gelenkkräften und/oder -drehmomenten des Roboters ermitteltes, extern auf den Roboter wirkendes Horizontaldrehmoment einen Horizontaldrehmoment-Schwellwert übersteigt, als auch zusätzlich eine auf Basis der ermittelten Gelenkkräfte und/oder -drehmomente des Roboters ermittelte, hierzu komplementäre externe Belastung einen Belastungsschwellwert unterschreitet.

In einer Ausführung weist die Steuerung Mittel zum kraftgeregelten, insbesondere impedanz- oder admittanzgeregelten, Steuern des Roboters in dem Handführ-Betriebsmodus auf.

In einer Ausführung weist das Mittel zum Auslösen einer Fehlerreaktion Mittel zum Beschränken einer Bewegungsgeschwindigkeit und/oder eines, insbesondere Gelenk- oder kartesischen, Arbeitsraums des Roboters, Mittel zum Erhöhen einer virtuellen Dämpfung und/oder Mittel zum Ausgeben eines Fehlersignals auf.

In einer Ausführung weist die Steuerung Mittel zum veränderlichen Vorgegeben wenigstens eines Schwellwertes auf.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere den Roboter steuern kann.

Weitere Vorteile und Merkmale ergeben sich aus den Unteransprüchen und den Ausführungsbeispielen. Hierzu zeigt, teilweise schematisiert:

Fig. 1:    eine Roboteranordnung mit einem Roboter und einer Steuerung nach einer Ausführung der vorliegenden Erfindung; und

Fig. 2:    ein Verfahren zum Umschalten der Steuerung in einen Handführ-Betriebsmodus nach einer Ausführung der vorliegenden Erfindung.

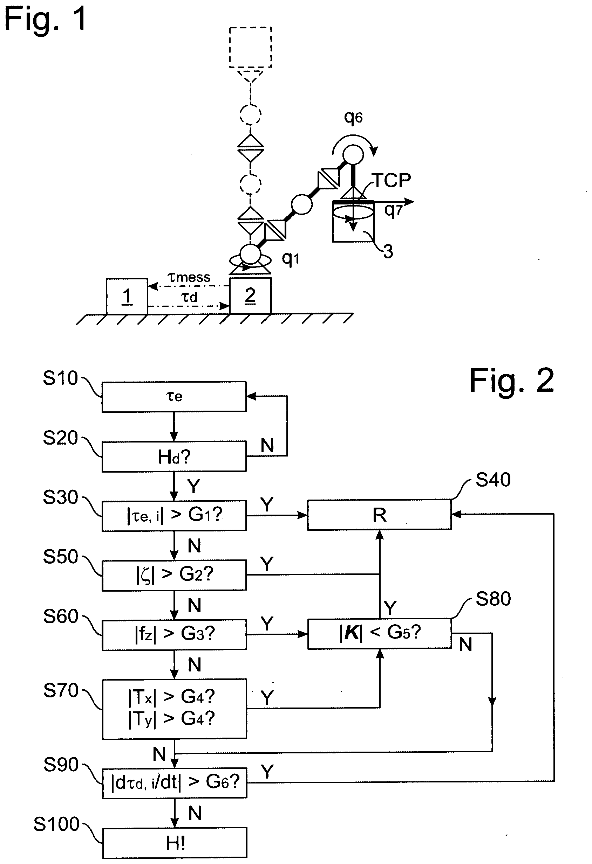

Fig. 1 zeigt eine Roboteranordnung mit einem Roboter 2 und einer Steuerung 1 zum Steuern des Roboters nach einer Ausführung der vorliegenden Erfindung.

Der Roboter weist im Ausführungsbeispiel sieben aktuierte Drehgelenke auf, von denen in Fig. 1 exemplarisch die Gelenkkoordinate bzw. der Gelenkwinkel $q_1$ des proximalen ersten Drehgelenks sowie die Gelenkkoordinaten bzw. -winkel $q_6$, $q_7$ des sechsten und distalen siebten Drehgelenks angedeutet sind.

Am Flansch des Roboters, an dem sein TCP angedeutet ist, ist eine von dem Roboter 2 geführte Last 3 angedeutet. Gestrichelt ist zudem eine vertikale sogenannte Kerzenstellung des Roboters 2 angedeutet.

Die Steuerung 1 führt ein nachfolgend insbesondere mit Bezug auf Fig. 2 näher erläutertes Verfahren zum Umschalten der Steuerung in einen Handführ-Betriebsmodus nach einer Ausführung der vorliegenden Erfindung durch bzw. ist hierzu hard- und/oder softwaretechnisch eingerichtet, insbesondere durch ein Computerprogrammprodukt nach einer Ausführung der vorliegenden Erfindung.

In einem ersten Schritt S10 werden die durch eine extern auf den Roboter wirkende Kraft oder ein extern auf den Roboter wirkendes Drehmoment aufgeprägten Gelenkdrehmomente $\tau_e$ auf Basis erfasster Gelenkdrehmomente $\tau_{mess}$ und auf Basis eines Modells des Roboters abgeschätzter Gelenkdrehmomente $\tau_{Modell}$ ermittelt: $\tau_e = \tau_{mess} - \tau_{Modell}$.

In einem zweiten Schritt S20 wird geprüft, ob ein Umschalten der Steuerung 1 in einen Handführ-Betriebsmodus, der zum Bewegen des Roboters 2 durch manuelles Aufprägen von Kräften und/oder Drehmomenten auf den Roboter eingerichtet ist, kommandiert worden ist. Solange dies nicht der Fall ist (S20: "N") kehrt das Verfahren zu Schritt S10 zurück.

Wurde ein Umschalten in den Handführ-Betriebsmodus kommandiert (S20: "Y"), prüft die Steuerung 1 in einem Schritt S30, ob wenigstens ein Gelenkdrehmoment $\tau_{e,i}$ der in Schritt S10 ermittelten Gelenkdrehmomente $\tau_e$ betragsmäßig einen vorgegebenen Gelenk-Schwellwert $G_1$ übersteigt.

Wurde beispielsweise die Last 3 nicht oder falsch modelliert, so prägt ihre Gewichtskraft in der in Fig. 1 ausgezogen dargestellten Pose, insbesondere im ersten Gelenk $q_1$, ein zusätzliches Gelenkdrehmoment $\tau_{e,1}$ ein, das von dem auf Basis des (falschen) Modells des Roboters 2 abgeschätzten Gelenkdrehmoment $\tau_{Modell,1}$ entsprechend abweicht.

Übersteigt wenigstens ein Gelenkdrehmoment $\tau_{e,i}$ den vorgegebenen Gelenk-Schwellwert $G_1$ (S30: "Y"), wird in einem Schritt S40 eine Fehlerreaktion R ausgelöst, insbesondere eine Bewegungsgeschwindigkeit und/oder ein Arbeitsraum des Roboters 2 beschränkt, eine virtuelle Dämpfung des impedanzgeregelten Roboters 2 erhöht und/oder ein Fehlersignal ausgegeben.

Andernfalls fährt das Verfahren mit Schritt S50 fort.

In diesem prüft die Steuerung 1, ob sich der Roboter 2 in einer Pose befindet, in der eine extern auf den Roboter wirkende Vertikalkraft nur (zu) geringe Gelenkdrehmomente aufprägen würde, wie dies beispielsweise in der in Fig. 1 gestrichelt angedeuteten Kerzenstellung der Fall ist: man erkennt, dass die Gewichtskraft der robotergeführten Last 3 in dieser Pose (theoretisch) keine zusätzlichen Gelenkdrehmomente aufprägen würde und somit ein entsprechender Modellfehler der Last 3 in dieser Pose nicht auf Basis der Gewichtskraft bzw. der durch sie aufgeprägten Gelenkdrehmomente detektierbar wäre.

Im Ausführungsbeispiel ermittelt die Steuerung 1 in Schritt S50 ein Verhältnis $\zeta = \dfrac{1}{|\mathbf{j}_z|}$ einer extern auf den Roboter wirkenden Vertikalkraft zu hierdurch aufgeprägten Gelenkdrehmomenten des Roboters mittels der Zeile

$$\mathbf{j}_z = \left[ \frac{\partial Z}{\partial q_1} \cdots \frac{\partial Z}{\partial q_n} \right]$$

der Jacobimatrix J des TCPs mit der vertikalen Komponente Z der kartesischen Lage des TCPs. Eine extern an seinem TCP auf den Roboter wirkende Vertikalkraft $f_z$ wird durch die transponierte Jacobimatrix $J^T$ des TCPs in die Gelenkdrehmomente projiziert $\left( \mathbf{J}^T \begin{bmatrix} 0 & 0 & f_z & 0 & 0 & 0 \end{bmatrix}^T = \mathbf{j}_z^T f_z = \boldsymbol{\tau}_e \right)$, so dass für das betragsmäßige Verhältnis der extern auf den Roboter wirkenden Vertikalkraft zu hierdurch aufgeprägten Gelenkdrehmomenten

gilt: $\dfrac{|f_z|}{|\boldsymbol{\tau}_e|} = \dfrac{1}{|\mathbf{j}_z|}$. Ist das Verhältnis $\zeta$ größer als ein Posen-Schwellwert $G_2$ bzw. äquivalent hierzu $|j_z|$ kleiner als der entsprechende Posen-Schwellwert $1/G_2$, (S50: "Y"), wird ebenfalls in Schritt S40 die Fehlerreaktion ausgelöst.

Analog kann auch, insbesondere mittels der entsprechenden Submatrix $J_{z,\omega x,\omega y}$ der Jacobimatrix, geprüft werden, ob ein extern auf den Roboter wirkendes Horizontaldrehmoment nur (zu) geringe Gelenkdrehmomente aufprägen würde.

Befindet sich der Roboter 2 nicht in einer Pose, in der externe Vertikalkräfte und/oder Horizontaldrehmomente zu geringe Gelenkdrehmomente aufprägen (S50: "N"), fährt die Steuerung 1 mit Schritt S60 fort.

In diesem ermittelt sie auf Basis der in Schritt S10 ermittelten Gelenkdrehmomente eine extern auf den Roboter wirkende Vertikalkraft $f_z = \left( \mathbf{j}_z^T \right)^{\#} \boldsymbol{\tau}_e$ mit der Pseudoinversen der Zeile $\mathbf{j}_z$ der Jacobimatrix und prüft, ob diese betragsmäßig einen Vertikalkraft-Schwellwert $G_3$ übersteigt. In einer Abwandlung erfolgt die Ermittlung alternativ mittels der Submatrix $\mathbf{J}_{z,\omega x,\omega y}$.

Ist dies nicht der Fall (S60: "N"), ermittelt sie in einem Schritt S70 in analoger Weise auf Basis der in Schritt S10 ermittelten Gelenkdrehmomente extern auf den Roboter wirkende Horizontaldrehmomente $T_x$, $T_y$, um eine zu der Vertikalen senkrechte x- und eine hierzu und zu der Vertikalen senkrechte y-Achse des kartesischen Raums im TCP und prüft, ob wenigstens eines dieser Drehmomente betragsmäßig einen Horizontaldrehmoment-Schwellwert $G_4$ übersteigt.

Wenn der Vertikalkraft-Schwellwert $G_3$ oder der Horizontaldrehmoment-Schwellwert $G_4$ überschritten wird (S60: "Y" ODER S70: "Y"), fährt die Steuerung mit Schritt S80 fort.

In diesem prüft sie, ob zusätzlich eine auf Basis der in Schritt S10 ermittelten Gelenkdrehmomente des Roboters ermittelte, zu der Vertikalkraft $f_z$ und den Horizontaldrehmomenten $T_x$, $T_y$ komplementäre externe Belastung

$$K = \boldsymbol{\tau}_e - \boldsymbol{J}_{z,\omega_x,\omega_y}^T \left( \boldsymbol{J}_{z,\omega_x,\omega_y}^T \right)^{\#} \boldsymbol{\tau}_e$$ einen Belastungsschwellwert $G_5$ betragsmäßig unterschreitet. Ist dies der Fall (S80: "Y"), wird ebenfalls in Schritt S40 die Fehlerreaktion ausgelöst.

Andernfalls (S70: "N" ODER S80: "N") fährt die Steuerung mit Schritt S90 fort, in dem sie prüft, ob wenigstens eine Änderung $d\tau_{d,i}/dt$ eines Soll-Gelenkdrehmoments $\tau_{d,i}$ infolge des Umschaltens betragsmäßig einen Änderungs-schwellwert $G_6$ übersteigt.

Übersteigt der Betrag einer Änderung eines Soll-Gelenkdrehmoment den Änderungs-Schwellwert (S90: "Y"), wird ebenfalls in Schritt S40 die Fehlerreaktion ausgelöst.

Andernfalls (S90: "N") wird in Schritt S100 in den normalen Handführ-Betriebsmodus umgeschaltet.

Im Ausführungsbeispiel werden Gelenkdrehmomente $\tau_{d,i}$, $\tau_{e,i}$ und Horizontaldrehmomente $T_x$, $T_y$ einzeln mit Schwellwerten verglichen. Dabei können für verschiedene Gelenke dieselben oder unterschiedliche Schwellwerte vorgegeben sein bzw. werden. Gleichermaßen können auch die Gelenkdrehmomente $\tau_d$, $\tau_e$ insgesamt, insbesondere ihre Vektorbetragsnorm, mit einem Schwellwert verglichen werden. Entsprechend kann allgemein eine Gelenkkraft bzw. ein Gelenkdrehmoment im Sinne der vorliegenden Erfindung in einer Ausführung ein- oder mehrdimensional sein. Obwohl in der vorhergehenden Beschreibung exemplarische Ausführungen erläutert wurden, sei darauf hingewiesen, dass eine Vielzahl von Abwandlungen möglich ist. So können eine oder mehrere der im Ausführungsbeispiel in einer logischen ODER-Verknüpfung durchgeführten Prüfungen S30, S50, S60, S70 und S90 und/oder die in einer logischen UND-Verknüpfung durchgeführte Prüfung S80 entfallen, insbesondere also bei Überschreiten des Vertikalkraft-Schwellwerts $G_3$ oder des Horizontaldrehmoment-Schwellwerts $G_4$ stets die Fehlerreaktion R ausgeführt werden. Gleichermaßen können in einer Abwandlung eine oder mehrere dieser Prüfungen auch jeweils nur bei einem erstmaligen Umschalten in den Handführ-Betriebsmodus nach einem Starten bzw. Initialisieren der Steuerung 1 bzw. des Roboters 2 durchgeführt werden.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

Bezuaszeichenliste

| 1 | Steuerung |
|---|---|
| 2 | Roboter |
| 3 | Last |
| $f_z$ | Vertikalkraft |
| $G_1,...,G_6$ | Schwellwert |
| $T_x$, $T_y$ | Horizontaldrehmoment |
| $\tau_d = [\tau_{d,1},..., \tau_{d,7}]^T$ | Soll-Gelenkdrehmomente |
| $\tau_e = [\tau_{e,1},..., \tau_{e\,7}]^T$ | durch externe(s) Kraft/Drehmoment aufgeprägte Gelenkdrehmomente |
| $\tau_{mess}$ | erfasste Gelenkdrehmomente |
| $\zeta$ | Verhältnis (externe(s) Vertikalkraft/Horizontaldrehmoment)/Gelenkdrehmomenten |
| q1,..., q7 | Gelenkkoordinaten |
| H | Handführ-Betriebsmodus |
| R | Fehlerreaktion |
| $\boldsymbol{K}$ | komplementäre externe Belastung |

**Patentansprüche**

**1.** Verfahren zum Umschalten einer Steuerung (1) eines Roboters (2) in einen Handführ-Betriebsmodus (H) zum Bewegen des Roboters durch manuelles Aufprägen von Kräften und/oder Drehmomenten auf den Roboter, wobei Gelenkkräfte und/oder -drehmomenten (imess) direkt durch Kraft- bzw. Drehmomentsensoren an Antrieben oder indirekt auf Basis von erfassten Strömen oder Spannungen der Antriebe erfasst werden;

durch eine extern auf den Roboter wirkende Kraft oder ein extern auf den Roboter wirkendes Drehmoment aufgeprägte Gelenkdrehmomente auf Basis der erfassten Gelenkkräfte bzw. -drehmomente und auf Basis eines Modells des Roboters abgeschätzter Gelenkdrehmomente ermittelt werden (S10); und

geprüft wird (S20), ob ein Umschalten der Steuerung in den Handführ-Betriebsmodus kommandiert worden ist; wobei

infolge des Umschaltens und
in Abhängigkeit von:

- Soll-Gelenkkräften und/oder -drehmomenten ($\tau_d$), die die mit dem Roboter signalverbundene Steuerung vorgibt,

eine Fehlerreaktion (R) ausgelöst wird (S40), die

- eine Beschränkung einer Bewegungsgeschwindigkeit und/oder eines, insbesondere Gelenk- oder kartesischen, Arbeitsraums des Roboters und/oder
- eine Erhöhung einer virtuellen Dämpfung und/oder
- die Ausgabe eines Fehlersignals

umfasst.

2.  Verfahren nach Anspruch 1, **dadurch gekennzeichnet, dass** die Fehlerreaktion in Abhängigkeit von den Gelenkkräften und/oder -drehmomenten ($\tau_{mess}$) ausgelöst wird, die direkt durch Kraft- bzw. Drehmomentsensoren an Antrieben oder indirekt auf Basis von erfassten Strömen oder Spannungen der Antriebe erfasst werden.

3.  Verfahren nach einem der vorhergehenden Ansprüche, **dadurch gekennzeichnet, dass** die Fehlerreaktion in Abhängigkeit davon ausgelöst wird, ob

eine auf Basis von erfassten Gelenkkräften und/oder -drehmomenten ($\tau_{mess}$) des Roboters ermittelte, extern auf den Roboter wirkende Vertikalkraft ($f_z$) einen Vertikalkraft-Schwellwert ($G_3$) übersteigt (S60); und/oder
ein auf Basis von erfassten Gelenkkräften und/oder -drehmomenten ($\tau_{mess}$) des Roboters ermitteltes, extern auf den Roboter wirkendes Horizontaldrehmoment ($T_x$, $T_y$) einen Horizontaldrehmoment-Schwellwert ($G_4$) übersteigt (S70); und/oder eine Änderung ($d\tau_{d,\,i}/dt$) einer Soll-Gelenkkraft oder eines Soll-Gelenkdrehmoments ($\tau_{d,\,i}$) infolge des Umschaltens einen Änderungs-Schwellwert ($G_6$) übersteigt (S90); und/oder
ein Verhältnis ($\zeta$) einer extern auf den Roboter wirkenden Vertikalkraft zu hierdurch aufgeprägten Gelenkkräften und/oder -drehmomenten des Roboters oder ein Verhältnis eines extern auf den Roboter wirkenden Horizontaldrehmoments zu hierdurch aufgeprägten Gelenkkräften und/oder -drehmomenten des Roboters einen Schwellwert ($G_2$) übersteigt; und/oder
eine durch eine extern auf den Roboter wirkende Kraft oder ein extern auf den Roboter wirkendes Drehmoment aufgeprägte Gelenkkraft des Roboters oder ein durch eine extern auf den Roboter wirkende Kraft oder ein extern auf den Roboter wirkendes Drehmoment aufgeprägtes Gelenkdrehmoment ($\tau_{e,\,i}$) des Roboters einen Schwellwert ($G_1$) übersteigt.

4.  Verfahren nach Anspruch 3, **dadurch gekennzeichnet, dass** die Fehlerreaktion in Abhängigkeit davon ausgelöst wird, ob

sowohl die auf Basis von ermittelten Gelenkkräften und/oder -drehmomenten des Roboters ermittelte, extern auf den Roboter wirkende Vertikalkraft den Vertikalkraft-Schwellwert übersteigt oder ein auf Basis von ermittelten Gelenkkräften und/oder -drehmomenten des Roboters ermitteltes, extern auf den Roboter wirkendes Horizontaldrehmoment einen Horizontaldrehmoment-Schwellwert übersteigt,
als auch zusätzlich eine auf Basis der ermittelten Gelenkkräfte und/oder - drehmomente des Roboters ermittelte, hierzu komplementäre externe Belastung (**K**) einen Belastungsschwellwert ($G_5$) unterschreitet.

5.  Verfahren nach einem der vorhergehenden Ansprüche, **dadurch gekennzeichnet, dass** der Roboter in dem Handführ-Betriebsmodus kraftgeregelt, insbesondere impedanz- oder admittanzgeregelt, gesteuert wird.

6.  Verfahren nach einem der vorhergehenden Ansprüche, **dadurch gekennzeichnet, dass** wenigstens ein Schwellwert ($G_1,...,G_6$) fest oder veränderlich vorgegeben ist.

7.  Steuerung (1) zum Steuern eines Roboters (2), die zur Durchführung eines Verfahrens nach einem der vorhergehenden Ansprüche eingerichtet ist.

8. Roboteranordnung mit einem Roboter (2) und einer Steuerung (1) nach dem vorhergehenden Anspruch zum Steuern des Roboters.

9. Computerprogrammprodukt mit einem Programmcode, der auf einem von einem Computer lesbaren Medium gespeichert ist, zur Durchführung eines Verfahrens nach einem der vorhergehenden Ansprüche 1-6.

**Claims**

1. A method of switching a control facility (1) of a robot (2) over to a manual guidance mode of operation (H) for moving the robot by manual application of forces and / or torques to the robot, wherein

   joint forces and / or joint torques ($\tau_{mess}$) are detected directly respectively by means of force sensors or torque sensors on drives, or indirectly on the basis of detected currents or voltages of the drives;
   joint torques which are applied by a force that acts externally on the robot or a torque that acts externally on the robot are determined (S10) on the basis of the detected joint forces or, respectively, detected joint torques, and on the basis of joint torques that are estimated on the basis of a model of the robot; and
   a check is carried out (S20) as to whether switching over of the control facility to the manual guidance mode of operation has been commanded; wherein
   as a result of the switching over and
   as a function of:

   - target joint forces and / or target joint torques ($\tau_d$), which are specified by the control facility that is connected to the robot in terms of signal communication,

   an error reaction (R) is triggered (S40), which comprises

   - a restriction of a speed of movement of the robot and / or a restriction of a working space of the robot, in particular a restriction of a joint-based working space or a Cartesian working space of the robot and / or
   - an increase of a virtual damping and / or
   - the outputting of an error signal.

2. The method according to claim 1, **characterised in that** the error reaction is triggered as a function of the joint forces and / or the joint torques ($\tau_{mess}$) which are detected directly respectively by force sensors or torque sensors on drives, or indirectly on the basis of detected currents or voltages of the drives.

3. The method according to any one of the preceding claims, **characterised in that** the error reaction is triggered in dependence upon whether

   a vertical force ($f_z$) that acts externally on the robot, which vertical force ($f_z$) is determined on the basis of detected joint forces and / or detected joint torques ($\tau_{mess}$) of the robot, exceeds (S60) a threshold value ($G_3$) for the vertical force; and / or
   a horizontal torque ($T_x$, $T_y$) that acts externally on the robot, which horizontal torque ($T_x$, $T_y$) is determined on the basis of detected joint forces and / or joint torques ($\tau_{mess}$) of the robot, exceeds (S70) a threshold value ($G_4$) for the horizontal torque; and / or
   a change ($d\tau_{d,i}/dt$) of a target joint force or of a target joint torque ($\tau_{Td,i}$) as a result of the switching over exceeds (S90) a change threshold value ($G_6$); and / or
   a ratio ($\zeta$) of a vertical force that acts externally on the robot, to joint forces and / or joint torques of the robot applied by the former, or a ratio of a horizontal torque that acts externally on the robot, to joint forces and / or joint torques of the robot applied by the former exceeds a threshold value ($G_2$); and / or
   a joint force of the robot which is applied by a force that acts externally on the robot or a torque that acts externally on the robot, or a joint torque ($\tau_{e,i}$) of the robot which is applied by a force that acts externally on the robot or a torque that acts externally on the robot, exceeds a threshold value ($G_1$).

4. The method according to claim 3, **characterised in that** the error reaction is triggered in dependence upon whether the vertical force that acts externally on the robot and which is determined on the basis of joint forces and / or joint torques of the robot that have been determined exceeds the threshold value for the vertical force, or a horizontal torque that acts externally on the robot and which is determined on the basis of joint forces and / or joint torques of the robot that have been determined exceeds a threshold value for the horizontal torque, as well as, additionally, an external load (**K**), which is determined on the basis of the determined joint forces and / or the determined joint torques of the robot and is complementary thereto, falls below a load threshold value ($G_5$).

5. The method according to any one of the preceding claims, **characterised in that** the robot is controlled in the manual guidance mode of operation in a force-controlled manner, in particular in an impedance-controlled manner or in an admittance-controlled manner.

6. The method according to any one of the preceding claims, **characterised in that** at least one threshold value ($G_1$, ..., $G_6$) is specified in a fixed or a variable manner.

7. A control facility (1) for controlling a robot (2), which control facility (1) is set up for carrying out a method in accordance with any one of the preceding claims.

8. A robot arrangement comprising a robot (2) and a control facility (1) in accordance with the preceding claim for controlling the robot.

9. A computer program product comprising a program code which is stored on a medium that is readable by a computer, for carrying out a method in accordance with any one of the preceding claims 1 to 6.


**Revendications**

1. Procédé de commutation d'une commande (1) d'un robot (2) dans un mode de fonctionnement manuel (H) pour le déplacement du robot par application manuelle de forces et/ou couples sur le robot, dans lequel des forces et/ou couples d'articulation ($t_{mess}$) sont détectés directement par des capteurs de force ou de couple au niveau d'entraînements ou indirectement sur la base de courants ou tensions détectées des entraînements ;

   des couples d'articulation appliqués par une force agissant en externe sur le robot ou un couple agissant en externe sur le robot sont déterminés sur la base de forces ou couples d'articulation détectés et sur la base d'un modèle du robot de couples d'articulation évalués (S10) ; et
   il est vérifié (S20) si une commutation de la commande en mode de fonctionnement manuel a été commandée ;
   dans lequel
   à la suite de la commutation et
   en fonction de :

      - forces et/ou couples d'articulation de consigne ($t_d$) que prescrit la commande reliée en signal au robot,

   une réaction d'erreur (R) est déclenchée (S40), laquelle comporte

      - une limitation d'une vitesse de mouvement et/ou d'un espace de travail, en particulier d'articulation ou cartésien, du robot et/ou
      - une augmentation d'un amortissement virtuel et/ou
      - la sortie d'un signal d'erreur.

2. Procédé selon la revendication 1, **caractérisé en ce que** la réaction d'erreur est déclenchée en fonction de forces et/ou couples d'articulation ($t_{mess}$) qui sont détectés directement par des capteurs de force ou de couple au niveau des entraînements ou indirectement sur la base de courants ou tensions détectées des entraînements.

3. Procédé selon l'une quelconque des revendications précédentes, **caractérisé en ce que** la réaction d'erreur est déclenchée en fonction du fait si une force verticale ($f_z$) agissant en externe sur le robot, déterminée sur la base de forces et/ou couples d'articulation ($t_{mess}$) détectées du robot dépasse (S60) une valeur seuil de force verticale ($G_3$) ; et/ou

   un couple horizontal ($T_x$, $T_y$) agissant en externe sur le robot, déterminé sur la base de forces et/ou couples d'articulation ($t_{mess}$) détectées du robot dépasse (S70) une valeur seuil de couple horizontal ($G_4$) ; et/ou

une modification ($d_{td,i}$/dt) d'une force d'articulation de consigne ou d'un couple d'articulation de consigne ($t_{d,i}$) à la suite de la commutation dépasse (S90) une valeur seuil de modification ($G_6$) ; et/ou

un rapport ($\zeta$) d'une force verticale agissant en externe sur le robot aux forces et/ou couples d'articulation appliqués par celle-ci du robot ou un rapport d'un couple horizontal agissant en externe sur le robot aux forces et/ou couples d'articulation appliqués par celle-ci du robot dépasse une valeur seuil ($G_2$) ; et/ou

une force d'articulation appliquée par une force agissant en externe sur le robot ou un couple agissant en externe sur le robot du robot ou un couple d'articulation ($t_{e,i}$) appliqué par une force agissant en externe sur le robot ou un couple agissant en externe sur le robot du robot dépasse une valeur seuil ($G_1$).

4. Procédé selon la revendication 3, **caractérisé en ce que** la réaction d'erreur est déclenchée en fonction du fait si

non seulement la force verticale agissant en externe sur le robot, déterminée sur la base de forces et/ou couples d'articulation déterminés du robot dépasse la valeur seuil de force verticale ou un couple horizontal agissant en externe sur le robot, déterminé sur la base de forces et/ou couples d'articulation déterminés du robot dépasse une valeur seuil de couple horizontal,

mais aussi en outre une sollicitation (K) externe complémentaire à celle-ci, déterminée sur la base de forces et/ou couples d'articulation déterminés du robot n'atteint pas une valeur seuil de sollicitation ($G_5$).

5. Procédé selon l'une quelconque des revendications précédentes, **caractérisé en ce que** le robot est commandé en étant régulé en force en mode de fonctionnement manuel, en particulier régulé en impédance ou admittance.

6. Procédé selon l'une quelconque des revendications précédentes, **caractérisé en ce qu'**au moins une valeur seuil ($G_1$, ..., $G_6$) est prédéfinie fixement ou de manière modifiable.

7. Commande (1) pour la commande d'un robot (2) qui est conçu pour la réalisation d'un procédé selon l'une quelconque des revendications précédentes.

8. Agencement de robot avec un robot (2) et une commande (1) selon la revendication précédente pour la commande du robot.

9. Produit de programme informatique avec un code de programme qui est enregistré sur un support lisible par un ordinateur, pour la réalisation d'un procédé selon l'une quelconque des revendications précédentes 1 à 6.

# Fig. 1

# Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013218823 A1
- EP 2492062 A2
- US 20140379126 A1
- DE 102008027008 A1
- US 5363474 A